# EUROPÄISCHE PATENTSCHRIFT

(11) **EP 3 402 755 B1**
(45) Veröffentlichungstag und Bekanntmachung des Hinweises auf die Patenterteilung: **25.01.2023**
(21) Anmeldenummer: 16831565.3
(22) Anmeldetag: 28.12.2016
(51) Int. Cl.: C03B 33/02, B23K 26/00, B23K 26/08, C03B 33/095, B23K 26/53, B23K 26/0622, B23K 103/00

(54) **LASERFILAMENTIEREN**
LASER FILAMENTATION
FILAMENTATION LASER

(30) Priorität: 11.01.2016 DE 102016000184
(43) Veröffentlichungstag der Anmeldung: 21.11.2018
(73) Patentinhaber: Zwiesel Kristallglas AG, 94227 Zwiesel (DE)
(72) Erfinder: LESCHE, Klaus, 94259 Kirchberg im Wald (DE); RÖCK, Gerhard, 94227 Zwiesel (DE); BREDL, Tobias, 94227 Zwiesel (DE)
(74) Vertreter: Müller-Boré & Partner Patentanwälte PartG mbB
(86) Internationale Anmeldenummer: PCT/EP2016/002184
(87) Internationale Veröffentlichungsnummer: WO 2017/121451

(56) Entgegenhaltungen:
- WO-A1-2016/007843
- DE-A1- 4 305 107
- DE-A1-102013 212 652
- US-A1- 2015 136 743
- US-A1- 2015 140 241

## Beschreibung

Die vorliegende Erfindung betrifft ein Verfahren und eine Vorrichtung zum Abtrennen des Überglases (Blaskappe) insbesondere bei Trinkgläsern oder anderen Hohlgläsern.

Bei der Herstellung von Trinkgläsern oder anderen Hohlgläsern insbesondere durch ein glasblas-technisches Verfahren betrifft regelmäßig ein wesentlicher Prozessschritt das Abtrennen der Blaskappe (Überglas) vom eigentlichen Trinkglas in einem Bereich des Glases, der am Ende den Trinkrand bildet. Für diesen Prozessschritt sind in der Glasindustrie mehrere Verfahren bekannt, die den besonderen Anforderungen in der Hohlglasherstellung bzw. -verarbeitung gerecht werden. Zwar gibt es auch in der Flachglasherstellung vielfältige Prozesstechnologien zur Trennen bzw. Schneiden von Glas, allerdings sind diese aufgrund der unterschiedlichen Geometrie bekanntermaßen nicht oder zumindest nicht ohne weiteres auf Hohlgläser übertragbar.

In der Glasindustrie sind zum Abtrennen der Blaskappe (Überglas) bei Trinkgläsern mehrere Verfahren bekannt. Diese Verfahren werden nachfolgend kurz aufgelistet. Ein bekanntes Verfahren bildet das Abschmelzen der Blaskappe mittels Flamme in der Heißformgebung. Hierbei wird ein Trinkglas mit Kappe mittels eines Brenners auf Mundrandhöhe über die Erweichungstemperatur erhitzt und nachfolgend die zu entfernende Kappe durch einen definierten Hub abgezogen. Die Kappe kann aber auch, je nach Lage des Glases, über das Eigengewicht und der Schwerkraft entfernt werden. Bei beiden Varianten erfolgt vor der eigentlichen Trennung der Kappe vom Trinkglas eine Einschnürung, d.h. das Ablösen des Überglases am Trinkrand beginnt in der Regel an einer Position und breitet sich von dort entlang des Randes in beide Richtungen aus. Als nachteilig bei diesem Verfahren wirkt sich die niedrige Qualität des Mundrandes aus, da sich dieser wulstig ausbildet und in der Regel nach dem "Abziehen" der Kappe eine Verdickung / Erhöhung am Mundrand entsteht.

Ein weiteres Verfahren bildet das Absprengen der Kappe mittels Ritzrad und Flamme. Hierbei wird an der späteren Trennfläche durch Anritzen beispielsweise mittels eines Diamanträdchens oder eines Hartmetallrädchens eine Verletzung (Sollbruchstelle) im Glas erzeugt. Durch punktuelle Flammeinwirkung kann nachfolgend die Kappe vom Trinkglas abgesprengt werden. Es kann zwar mit diesem Verfahren eine hohe Qualität des Mundrandes erzeugt werden, jedoch muss vor dem eigentlichen Verschmelzvorgang die Bruchkante nassgeschliffen, gewaschen und anschließend wieder getrocknet werden. Das Verschmelzen bzw. Feuerpolieren des Mundrandes erfolgt dabei nachgeschaltet in einer separaten Verschmelzanlage.

Das Abtrennen der Blaskappe vom Trinkglas kann auch mittels CO₂-Laser erfolgen. Hierbei wird im Bereich des späteren Mundrandes am Trinkglas eine Trennstelle (Verletzung der Oberfläche) mittels Laserstrahl erzeugt. Durch Anritzen mit einem Diamant- oder Hartmetallrädchen kann zwar eine hohe Qualität erzeugt werden, jedoch bedingt das Verfahren, dass der Mundrand durch Schleifen nachbearbeitet und gewaschen werden muss. Für das Erzeugen des Mundrandes ist ebenfalls eine separate Verschmelzanlage erforderlich.

CO₂-Laser werden aber auch in der Heißformgebung für das Abschneiden bzw. Abschmelzen der Blaskappe verwendet. Hierbei wird das Trinkglas an der späteren Trennstelle auf die Erweichungstemperatur erwärmt und nachfolgend die Kappe durch eine Hubbewegung abgezogen. Der Einsatz im Heißbereich liefert zwar eine gute Qualität des Mundrandes, erschwert jedoch die Kontrolle des Prozesses im Bezug auf thermische Spannungen und den daraus resultierenden Glasbruch.

US 2015/0136743 A1 beschreibt ein Verfahren zum Bearbeiten und Lösen geschlossener Formen von einem transparenten, spröden Substrat, wobei Bursts von ultraschnellen Laserpulsen verwendet werden um Öffnungsmuster in das Substrat zu bohren.

WO 2016/007843 A1 beschreibt ein Verfahren zum Laserschneiden eines transparenten Glasgegenstandes.

DE 43 05 107 A1 beschreibt ein Verfahren und eine Vorrichtung zum Schneiden eines spröden Körpers mit Laserstrahlung.

US 2015/140241 A1 beschreibt ein Verfahren zur Herstellung eines spiralförmig geschnittenen transparenten Rohres unter Verwendung von Laserbearbeitung.

DE 10 2013 212 652 A1 beschreibt ein Verfahren einer Vorrichtung zum Betreiben einer Werkzeugmaschine, wobei die Werkzeugmaschine eine Rotationseinheit aufweist, die dazu ausgebildet ist ein Werkstück um eine Rotationsachse mit einem einstellbaren Drehzahlverlauf zu rotieren. Die Werkzeugmaschine weist einen Ultrakurzpulslaser zum Erzeugen von Laserpulsen auf.

Vor diesem Hintergrund ist es eine Aufgabe der vorliegenden Erfindung, eine vereinfachte Abtrennung der Blaskappe bzw. des Überglases bei Trinkgläsern zu schaffen. Diese Aufgabe wird durch ein Verfahren mit den in Anspruch 1 angegebenen Merkmalen sowie durch eine Vorrichtung mit den in Anspruch 6 angegebenen Merkmalen gelöst. Bevorzugte Ausführungsformen sind Gegenstand der abhängigen Ansprüche.

Insbesondere bietet die Erfindung somit ein Verfahren zum Abtrennen des Überglases bei der Herstellung von Hohlgläsern. Dieses Verfahren umfasst ein Zentrieren eines Hohlglases in einer Aufnahmevorrichtung, welche ausgelegt ist, das Hohlglas zu halten und um eine Rotationsachse zu rotieren, derart, dass eine Trennlinie, entlang der das Überglas von dem herzustellenden Hohlglas getrennt werden soll, zur Rotationsachse zentriert ist. Insbesondere liegt die Trennlinie in einer Ebene senkrecht zur Rotationsachse. Außerdem umfasst das Verfahren ein Bearbeiten des Hohlglases an einer Vielzahl von Positionen entlang der Trennlinie mittels eines Laserstrahls zur Erzeugung lokaler Filamente mit geschwächter (bzw. veränderter/geschädigter) Glasstruktur während einer Rotation des Hohlglases um die Rotationsachse. Solche Filamente stellen insbesondere sich länglich entlang der Einstrahlrichtung des Laser erstreckende Kanäle dar, in denen eine Materialveränderung aufgrund einer hohen Laserintensität stattfindet.

Um die hohe Laserintensität zu erreichen wird vorzugsweise ein fokussierter, besonders bevorzugt gepulster Laser verwendet. Besonders bevorzugt wird der Laser derart einbestrahlt, dass sich diese länglichen Kanäle mit veränderter bzw. geschädigter bzw. geschwächter Struktur des Glasmaterials über eine Länge erstrecken, die aufgrund eines Selbstfokusierungseffekts länger ist als die eigentliche Gaußsche Fokuslänge des Laserstrahls. Derartige Laserprozesse, insbesondere die hierfür vorzugsweise verwendeten Laser sind beispielsweise in WO 2012/006736 A2 beschrieben. Dort wurden diese Laser allerdings nur für Flachglas vorgeschlagen und eingesetzt. Durch die erfindungsgemäße Art und Weise des Einsatzes, insbesondere in Verbindung mit dem Erfindungsgemäßen Zentrieren und Rotieren der zu bearbeitenden Gläser wurde erstmals erkannt, dass trotz der hohen Anforderungen an die genau Fokussierung für die erfolgreiche Ausbildung der Filamente auch die Anwendung bei Hohlgläsern möglich und sehr effizient ist.

Nach dem Ausbilden der Filamente umfasst das Verfahren außerdem ein Einbringen von Energie entlang der Trennlinie zur Abtrennung des Überglases entlang der geschwächten Glasstruktur.

Die Erfindung erreicht damit ein besonders effizientes Abtrennen des Überglases, bei dem eine verunreinigende Nachbearbeitung des Glasrandes im Bereich der Trennlinie und damit auch eine unmittelbar nachfolgende Reinigung nicht mehr erforderlich ist. Dies reduziert die nötigen Verfahrensschritte und verhindert beispielsweise, dass nach dem Reinigen noch Reinigungsfluid (z.B. Wasser) auf dem Glas verbleibt, das bei nachfolgenden Prozessschritten störend sein kann.

Der neuartige Prozess des Laserfilamentschneidens insbesondere mittels Ultrakurzpulslaser ist bis dato zwar in der Flachglasindustrie, hier vor allem für gehärtetes Displayglas (z.B. Handys), im Einsatz (siehe beispielsweise die zitierte Schrift WO 2012/006736 A2). Aber es ist bisher nicht publiziert worden, dass und insbesondere in welcher Weise diese Technologie auch in der Hohlglasindustrie großes Potential aufzeigen kann. Bei Hohlglas (Stielgläser und Becher) eignet sich diese Lasertechnologie vor allem für das Abtrennen des Überglases (Kappe) am Trinkglas, wenn es in der von der vorliegenden Erfindung vorgeschlagenen Weise eingesetzt wird.

Das Zentrieren des Hohlglases umfasst ein Grundzentrieren, welches insbesondere ein Abstellen des Hohlglases auf einer Ablagefläche, ein Verschieben des Hohlglases auf der Ablagefläche bzw. in oder an der Aufnahmevorrichtung zum Zentrieren des Hohlglases in der Höhe der Trennlinie relativ zur Rotationsachse, und ein anschließendes Aufnehmen des Hohlglases mittels der Aufnahmevorrichtung umfasst. Alternativ kann das Verschieben zum Zweck der Grundzentrierung auch erst nach einem Aufnehmen des Hohlglases mittels der Aufnahmevorrichtung erfolgen. In diesem Falls umfasst das Grundzentrieren ein verschiebbares Aufnehmen des Hohlglases mittels der Aufnahmevorrichtung, ein Verschieben des Hohlglases in oder an der Aufnahmevorrichtung bzw. relativ zur Aufnahmevorrichtung zum Zentrieren des Hohlglases in der Höhe der Trennlinie relativ zur Rotationsachse, und ein anschließendes Fixieren bzw. Arretieren des Hohlglases in bzw. an der Aufnahmevorrichtung umfasst.

Dabei erfolgt das Grundzentrieren vorzugsweise durch direktes mechanisches Berühren und Drücken am Glas im Bereich der Trennlinie mittels Zentrierelementen. Es ist also vorab kein separates Messen erforderlich. Das Verschieben kann dabei beispielsweise mittels einer Mehrzahl schwenkbarer Klauen als Zentrierelemente erfolgen, die symmetrisch zur Rotationsachse bewegbar sind und damit das Hohlglas verschieben können. Alternativ können auch relativ zueinander und symmetrisch zur Rotationsachse bewegbare Prismen als Zentrierelemente eine Verschiebung des Hohlglases auf der Ablagefläche erreichen, bevor das Hohlglas von der Aufnahmevorrichtung aufgenommen wird. Besonders bevorzugt berühren die Klauen bzw. Prismen das Hohlglas dabei im Bereich der Trennlinie, d.h. insbesondere in einem Bereich von nicht mehr als etwa 20 mm, vorzugsweise in einem Bereich von nicht mehr als etwa 10 mm, noch mehr bevorzugt in einem Bereich von nicht mehr als etwa 5 mm von der Trennlinie entfernt.

Damit kann auf sehr einfache und zuverlässige Weise bereits eine schnelle Zentrierung auf den relevanten Bereich der Trennlinie erreicht werden, um eine Änderung einer Position der Laserbearbeitung an der Trennlinie während einer Rotation des Glases möglichst gering zu halten.

Besonders bevorzugt ist dabei allerdings, wenn die Zentrierelemente (wie z.B. Klauen und/oder Prismen) das Glas zwar in der Nähe der Trennlinie (z.B. im Bereich der oben genannten Abstände davon, aber nicht über der Trennlinien, also nicht im Bereich des späteren Glases, sondern (eher) im Bereich des Überglases, also der Blaskappe berühren. Damit werden eventuelle Verletzungen des späteren Glases durch die Zentrierelemente vermieden.

Gemäß Anspruch 1 umfasst das Zentrieren des Hohlglases ein Feinzentrieren des von einer Halteeinrichtung der Aufnahmevorrichtung gehaltenen Hohlglases. Dabei umfasst das Feinzentrieren insbesondere ein Ermitteln einer Dezentrierung des von der Aufnahmevorrichtung gehaltenen Hohlglases mittels einer Zentriermesseinrichtung. Besonders bevorzugt erfolgt das Ermitteln der Dezentrierung während einer Rotation des Glases mittels der Aufnahmevorrichtung um die Rotationsachse. Außerdem umfasst das Feinzentrieren ein Verschieben der Halteeinrichtung der Aufnahmevorrichtung relativ zur Rotationsachse, um die ermittelte Dezentrierung zumindest teilweise zu kompensieren.

Anders als das Grundzentrieren berücksichtigt das Feinzentrieren somit eine Dezentrierung im montierten bzw. arretierten Zustand des Glases. Gerade beim Aufnehmen des Glases durch die Aufnahmevorrichtung oder bei der Arretierung des Glases in der Aufnahmevorrichtung kann es zu einer vorab nicht kompensierbaren Dezentrierung kommen, wenn beispielsweise während der Grundzentrierung der Glasboden, über welchen vorzugsweise die Aufnahmevorrichtung das Glas aufnimmt bzw. mittels welchem das Glas an der Halteeinrichtung anliegt bzw. arretiert wird, nicht parallel zur Auflagefläche ist. In diesem Fall wird das Glas beim Aufnehmen möglicherweise nochmals etwas verkippt, so dass die Trennlinien nicht mehr genau zur Rotationsachse zentriert ist. Vorzugsweise wird beim Feinzentrieren, insbesondere anders als beim Grundzentrieren, das Glas zum Zweck des Verschiebens nicht mehr direkt berührt und gedrückt. Statt dessen wird vorzugsweise die Halteeinrichtung der Aufnahmevorrichtung durch Drücken verschoben. Da auf diese Weise keine Beschädigungen des Glases drohen, können bei diesem Drücken auch etwas größere Kräfte eingesetzt werden als beim Grundzentrieren, wodurch es möglich ist, das Glas während des Feinzentrierens durchgängig arretiert zu halten, um ein ungewolltes bzw. unkontrolliertes Verrutschen zu verhindern. Damit wird beim Feinzentrieren eine höhere Präzision und Reproduzierbarkeit erreicht.

Gemäß Anspruch 1 umfasst das Verfahren sowohl das Grundzentrieren als auch das Feinzentrieren, weil dadurch das Feinzentrieren auf eine vergleichsweise geringe Verschiebung der Halteeinrichtung beschränkt werden kann, was eine vereinfachte aber damit auch präzisere Konstruktion der Aufnahmevorrichtung erlaubt.

In einer bevorzugten Ausführungsform umfasst das Bearbeiten des Hohlglases mittels des Laserstrahls ein Nachführen eines Fokuspunktes des Laserstrahls derart, dass das Nachführen umfasst: ein Ermitteln einer Ovalität und/oder Restexzentrizität des Hohlglases entlang der Trennlinie; und ein Verschieben einer Optikeinheit in einer Richtung senkrecht zur Rotationsachse während einer Rotation des Glases, um den Fokuspunkt des Laserstrahls der ermittelten Ovalität und/oder Restexzentrizität nachzuführen. So kann es selbst bei einer idealen Zentrierung des Glases im Bereich der Trennlinie während einer Rotation des Glases zu Variationen des Arbeitspunktes für den Laser kommen, die aufgrund einer Abweichung des Glasquerschnitts entlang der Trennlinien von einer idealen Kreisform (Ovalität) entstehen. Um dennoch eine möglichst präzise Fokussierung des Lasers im Bereich (insbesondere innerhalb) der Glaswand zu erreichen, wird vorzugsweise diese Ovalität für jedes Glas individuell erfasst und der Fokuspunkt entsprechend in einer Ebene senkrecht zur Rotationsachse nachgeführt. Damit wird sichergestellt, dass im Endeffekt auch das Trennlinien in einer Ebene parallel zum Glasboden liegt.

Vorzugsweise trifft der Laserstrahl für die Bearbeitung im Wesentlichen senkrecht auf die Glasfläche auf. Insbesondere für den Fall eines sich im Bereich der Trennlinie verengenden oder aufweitenden Glases erfolgt daher zum Bearbeiten des Hohlglases ein Einstrahlen des Laserstrahls auf das Hohlglas vorzugsweise in einer Einstrahlrichtung, die nicht senkrecht zur Rotationsachse liegt. Auch in diesem Fall erfolgt aber ein Nachführen des Laserfokus entsprechend der Ovalität und/oder Restexzentrizität des Glases aber vorzugsweise innerhalb einer Ebene senkrecht zur Rotationsachse. Für den Fall aber, dass Gläser mit dickeren Wänden bearbeitet werden sollen, bei denen es vorteilhaft ist, die Filamentausbildung nicht nur während einer Umdrehung des Glases und in einer Fokustiefe relativ zur Glasoberfläche zu bewirken, sondern in mehreren aufeinanderfolgenden Laserbearbeitungsschritten mit unterschiedlichen Fokustiefen eine Filamentausbildung zu bewirken, umfasst das Verfahren vorzugsweise:
- einen ersten Laserbearbeitungsvorgang, während dessen das Glas um 360° um die Rotationsachse gedreht wird und der Laser auf eine erste Fokustiefe in der Glaswand des Hohlglases eingestellt ist; und
- einen zweiten Laserbearbeitungsvorgang nach dem ersten Laserbearbeitungsvorgang, während dessen das Glas um 360° um die Rotationsachse gedreht wird und der Laser auf eine zweite Fokustiefe in der Glaswand des Hohlglases eingestellt ist, welche gegenüber der ersten Fokustiefe in einer Richtung parallel zur Einstrahlrichtung verschoben ist.

Anders als das Nachführen zur Kompensation der Ovalität und/oder Restexzentrizität erfolgt also das Versetzen der Fokustiefen für aufeinanderfolgende Laserbearbeitungsvorgänge zur Ausbildung derselben Trennlinie vorzugsweise nicht unbedingt in einer Ebene senkrecht zur Rotationsachse, sondern vorzugsweise in einer Richtung parallel zur Einstrahlrichtung. Es hat sich herausgestellt, dass auf diese Weise ein besseres Zusammenwirken der nacheinander gebildeten Filamente zu einem leichteren Abtrennen des Überglases und zu einer saubereren Trennungskante führt.

Vorzugsweise umfasst das Einbringen von Energie entlang der Trennlinie zur Abtrennung des Überglases entlang der geschwächten Glasstruktur ein lokales Einbringen von thermischer Energie während einer Rotation des Hohlglases um die Rotationsachse. Die dabei entstehenden thermischen Spannungen führen vorzugsweise ohne eine weitere mechanische Einwirkung bereits zum gezielten und präzisen Glasbruch entlang der Trennlinie.

In einem weiteren Aspekt bietet die Erfindung eine entsprechende Vorrichtung zum Abtrennen des Überglases bei der Herstellung von Hohlgläsern. Diese Vorrichtung umfasst:
- eine Aufnahmevorrichtung, welche ausgelegt ist, ein Hohlglas zu halten und um eine Rotationsachse zu rotieren,
- eine Zentriereinrichtung zum Zentrieren des Hohlglases in der Aufnahmevorrichtung derart, dass eine Trennlinie, entlang der das Überglas von dem herzustellenden Hohlglas getrennt werden soll, zur Rotationsachse zentriert ist;
- eine Laserbearbeitungseinrichtung, welche insbesondere einen fokussierten, gepulsten Laser umfasst, zum Bearbeiten des Hohlglases an einer Vielzahl von Positionen entlang der Trennlinie mittels eines Laserstrahls zur Erzeugung lokaler Filamente mit geschwächter Glasstruktur während einer Rotation des Hohlglases um die Rotationsachse; und
- eine Abtrenneinrichtung zum Einbringen von Energie entlang der Trennlinie zur Abtrennung des Überglases entlang der geschwächten Glasstruktur.

Die Zentriereinrichtung umfasst eine Grundzentriereinrichtung, welche ausgelegt ist, das Hohlglas auf der Ablagefläche derart zu verschieben, dass es in der Höhe der Trennlinie relativ zur Rotationsachse zentriert wird. Dabei ist die Aufnahmevorrichtung ausgelegt, das von der Grundzentriereinrichtung zentrierte Hohlglas aufzunehmen.

Die Aufnahmevorrichtung umfasst eine relativ zur Rotationsachse verschiebbare Halteeinrichtung zum Halten des Hohlglases. Dabei umfasst die Zentriereinrichtung:
- eine Zentriermesseinrichtung zum Ermitteln einer Dezentrierung des von der Aufnahmevorrichtung gehaltenen Hohlglases; und
- eine Feinzentriereinrichtung zum Verschieben der Halteeinrichtung der Aufnahmevorrichtung relativ zur Rotationsachse, um die ermittelte Dezentrierung zumindest teilweise zu kompensieren.

Vorzugsweise umfasst die Vorrichtung eine Ovalitätsmesseinrichtung, zum Ermitteln einer Ovalität und/oder Restexzentrizität des Hohlglases entlang der Trennlinie; und eine Nachführeinrichtung, welche ausgelegt ist, eine Optikeinheit der Laserbearbeitungseinrichtung in einer Richtung senkrecht zur Rotationsachse derart zu verschieben, dass der Fokuspunkt des Laserstrahls während einer Rotation des Hohlglases der ermittelten Ovalität und/oder Restexzentrizität nachgeführt wird bzw. folgt. In einer Ausführungsform kann die Ovalitätsmesseinrichtung identisch mit der Zentriermesseinrichtung sein bzw. von dieser gebildet werden.

Vorzugsweise ist die Laserbearbeitungseinrichtung ausgelegt, den Laserstrahl in einer Einstrahlrichtung auf das Hohlglas einzustrahlen, die nicht senkrecht zur Rotationsachse liegt. Die Einstrahlrichtung wird dabei von einer optischen Achse der Optikeinheit der Laserbearbeitungseinrichtung definiert bzw. gebildet. Diese geneigte Einstrahlrichtung ist insbesondere dann vorteilhaft, wenn sich die Trennlinie in einem Bereich des Glases mit einer Aufweitung oder Verengung, also einem nicht zylindrischen bzw. einem geneigten Wandverlauf befindet. Damit kann der Laser dennoch lokal senkrecht auf die Glaswand treffen, was eventuelle optische Verluste (z.B. durch Reflexionen) reduziert. Besonders bevorzugt ist die Vorrichtung dabei ausgelegt, in einem ersten Laserbearbeitungsvorgang, während dessen das Glas um 360° um die Rotationsachse gedreht wird, eine erste Fokustiefe des Laserstrahls in der Glaswand des Hohlglases einzustellen, und in einem zweiten Laserbearbeitungsvorgang nach dem ersten Laserbearbeitungsvorgang, während dessen das Glas um 360° um die Rotationsachse gedreht wird, eine zweite Fokustiefe des Laserstrahls in der Glaswand des Hohlglases einzustellen, welche gegenüber der ersten Fokustiefe in einer Richtung parallel zur Einstrahlrichtung verschoben ist. Damit können eine größere Glasdicken sehr präzise und zuverlässig entlang der Trennlinie bearbeitet werden. Vorzugsweise sind insbesondere für noch höhere Wandstärken des Glases auch mehr als zwei Umläufe (z.B. drei, vier oder fünf) mit sukzessive veränderter Fokustiefe möglich.

Vorzugsweise umfasst die Abtrenneinrichtung eine thermische Energiequelle, insbesondere einen Gasbrenner oder einen CO₂-Laser, die ausgelegt ist, während einer Rotation (eine oder mehrere Umläufe) des Hohlglases um die Rotationsachse, lokal thermische Energie in das Hohlglas entlang der Trennlinie einzubringen.

Vorzugsweise umfasst die Vorrichtung eine Mehrzahl von Bearbeitungsstationen, von denen jede umfasst:
- eine Aufnahmevorrichtung, welche ausgelegt ist, ein Hohlglas zu halten und um eine Rotationsachse zu rotieren; und
- eine Zentriereinrichtung zum Zentrieren des Hohlglases in der Aufnahmevorrichtung derart, dass die Trennlinie, entlang der das Überglas von dem herzustellenden Hohlglas getrennt werden soll, zur Rotationsachse zentriert ist;
- eine Optikeinheit zum Fokussieren des Laserstrahls auf das von der jeweiligen Aufnahmevorrichtung gehaltene Hohlglas entlang der Trennlinie; und
- ein Laserstrahleinkoppelelement (z.B. ein schwenkbarer Umlenkspiegel) zum selektiven Einkoppeln eines Laserstrahls in die Optikeinheit der jeweiligen Bearbeitungsstation.

Vorzugsweise ist jede der Aufnahmevorrichtungen in einer Mehrzahl von Bearbeitungsstationen gemäß einer der hier beschriebenen bevorzugten Ausführungsformen von Vorrichtungen ausgeführt. Analoges gilt für entsprechende Zentriereinrichtungen, welche jeweils eine entsprechende Grundzentriereinrichtung und/oder eine Feinzentriereinrichtung aufweisen können. Auch die Nachführung der einzelnen Optikeinheiten zur Kompensation von Ovalitäten und/oder Restexzentrizität der einzelnen Gläser können in jeder Bearbeitungsstation eigens in den beschriebenen bevorzugten Weisen implementiert sein.

Weitere Details insbesondere zu bevorzugten Ausführungsformen und Implementierungen der Erfindung werden nachfolgend unter Bezugnahme auf die beigefügten Zeichnungen beispielhaft erläutert. Dabei zeigen:
- Fig. 1A: eine Aufnahmevorrichtung mit einer Ansaugeinrichtung zum Aufnehmen eines Glases für eine Bearbeitung gemäß einer bevorzugten Ausführungsform der Erfindung;
- Fig. 1B: eine Aufnahmevorrichtung mit einer Greifereinrichtung zum Aufnehmen eines Glases für eine Bearbeitung gemäß einer weiteren bevorzugten Ausführungsform der Erfindung;
- Fig. 2A und 2B: die Funktionsweise einer Grundzentriereinrichtung gemäß einer bevorzugten Ausführungsform der Erfindung;
- Fig. 3A und 3B: die Funktionsweise einer Grundzentriereinrichtung gemäß einer weiteren bevorzugten Ausführungsform der Erfindung;
- Fig. 4A bis 4D: unterschiedliche Zentriermesseinrichtungen zum Erfassen einer Rundlaufabweichung (Dezentrierung) gemäß bevorzugter Ausführungsformen der vorliegenden Erfindung;
- Fig. 5A und 5B: die Funktionsweise einer Feinzentriereinrichtung gemäß einer bevorzugten Ausführungsform der Erfindung;
- Fig. 6A und 6B: die Anordnung und Funktionsweise einer Laserbearbeitungseinrichtung gemäß unterschiedlicher Ausführungsformen der Erfindung;
- Fig. 7: eine Vorrichtung gemäß einer bevorzugte Ausführungsform der Erfindung mit einer Mehrzahl von Bearbeitungsstationen; und
- Fig. 8A und 8B: eine Vorgang des Facettierens des Mundrandes eines Trinkglases mittels eines CO₂-Lasers.

Als Ausgangslage für eine präzise und zuverlässige Bearbeitung des Glases insbesondere mittels eines Ultrakurzpulslaser dient eine sehr genaue Positionierung einer Optikeinheit des Lasers relativ zu dem zu bearbeitenden Glas. Diese Positionierung, insbesondere der Abstand zwischen der Optik und der Glasoberfläche, sollte während des gesamten Bearbeitungsvorgangs mittels des Lasers möglichst genau eingehalten werden. Im Gegensatz zu einer Bearbeitung von Flachglas, bei der der Abstand zwischen Optik und Glas relativ einfach bestimmt und eingehalten werden kann, stellt diese Anforderung bei der Trinkglasbearbeitung aufgrund der verschiedenen Formen und Geometrien der Trinkgläser, sowie einer regelmäßig wesentlich größeren Toleranz bzw. Variation in der Reproduzierbarkeit der exakten Formen bzw. Geometrien eine Herausforderung dar.

Für eine maschinelle Bearbeitung von Trinkgläsern ist es vorteilhaft, zumindest während eines maschinellen Abtrennens des Überglases (Blaskappe bzw. Kappe) die Gläser kopfüber zu halten, so dass die Kappe, welche abgetrennt werden soll, nach unten wegfallen kann und somit keine zusätzliche Vorrichtung benötigt wird. Vorzugsweise wird dazu jedes Glas vor der Bearbeitung zur Abtrennung des Überglases mittels einer Aufnahmevorrichtung aufgenommen. Vorzugsweise wird hierzu das Trinkglas zunächst kopfüber mit der Kappe auf einer Ablagefläche (z.B. Ablageplatte) abgestellt. Anschließend kann durch eine Hubbewegung (z-Richtung) das Glas mittels der Aufnahmevorrichtung aufgenommen und angehoben werden. Dabei ist die Aufnahmevorrichtung vorzugsweise so konzipiert, dass sowohl Stielgläser, als auch Becher aufgenommen und gehalten werden können.

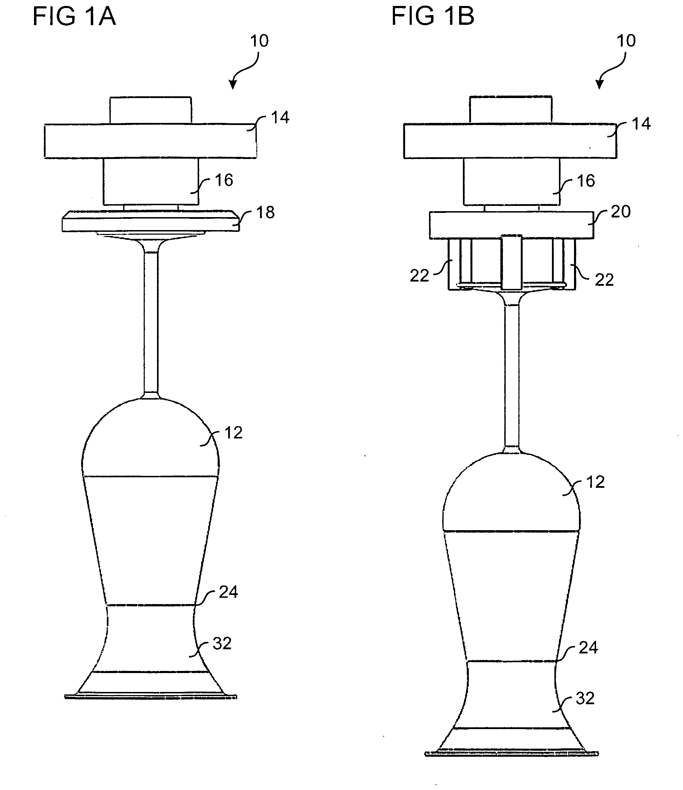

**Fig. 1A** zeigt eine Aufnahmevorrichtung 10 zum Aufnehmen bzw. Halten eines Glases, insbesondere eines Trinkglases 12 gemäß einer bevorzugten Ausführungsform der Erfindung. Vorzugsweise umfasst die Aufnahmevorrichtung eine insbesondere um eine vertikale Rotationsachse drehbare Rotationseinheit 14, an welcher eine Halteeinrichtung zum Halten des Glases 12 montiert ist. Besonders bevorzugt ist die Halteeinrichtung über einen Adapter 16 mit der Rotationseinheit 14 verbunden und kann gegen eine andere Halteeinrichtung ausgetauscht werden. In der in Fig. 1A dargestellten bevorzugten Ausführungsform wird die Halteeinrichtung von einer Ansaugeinrichtung 18 gebildet, welche ausgelegt ist, das Glas 12 durch Ansaugen des Glasbodens zu halten. In einer anderen bevorzugten Ausführungsform gemäß **Fig. 1B** wird die Halteeinrichtung von einer Greifereinrichtung 20 gebildet, welche ausgelegt ist, das Glas 12 durch eine Mehrzahl von Greiferfingern 22 (vorzugsweise zumindest drei) zu halten. Unabhängige von der Art der Halteeinrichtung ist diese vorzugsweise ausgelegt, das Glas 12 derart zu halten, dass der Glasboden senkrecht zur Rotationsachse der drehbaren Rotationseinheit 14 ist.

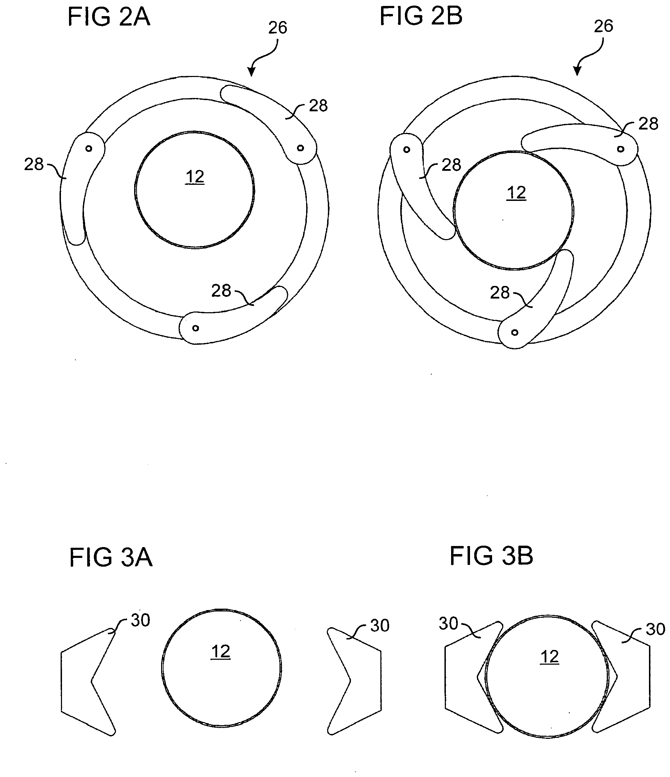

Vorzugsweise wird das Glas 12, bevor es über die Aufnahmevorrichtung 10 aufgenommen wird, insbesondere auf Höhe einer späteren Trennlinie oder Trennebene 24 vorzentriert. Das heißt, das Glas 12 wird vor der Aufnahme durch die Aufnahmevorrichtung 10 auf der Ablagefläche so positioniert, dass es insbesondere auf Höhe der späteren Trennlinie zu einer (vertikalen) Rotationsachse der Rotationseinheit 14 zentriert wird. Dadurch kann bereits eine gute Rundlaufeigenschaft um die Rotationsachse bewirkt werden. Diese Vorzentrierung wird vorzugsweise mittels einer Grundzentriereinrichtung 26 bewirkt, wie sie beispielsweise in **Fig. 2A** dargestellt ist. In dieser Ausführungsform von Fig. 2A umfasst die Grundzentriereinrichtung 26 eine Mehrzahl von einschwenkenden Klauen 28 als Zentrierelemente, welche vorzugsweise ausgelegt und angeordnet sind, das Glas 12 etwa in Höhe der späteren Trennlinie zu berühren und damit zur Vorzentrierung bzw. Grundzentrierung auf der Ablagefläche zu verschieben (**Fig. 2B**). In einer anderen bevorzugten Ausführungsform gemäß **Fig. 3A** umfasst die Grundzentriereinrichtung 26 eine Mehrzahl von Prismen 30 als Zentrierelemente, welche vorzugsweise ausgelegt und angeordnet sind, das Glas 12 etwa in Höhe der späteren Trennlinie zu berühren und damit zur Vorzentrierung bzw. Grundzentrierung zu verschieben (**Fig. 3B**). Auch andere Zentrierelemente sind möglich.

Nachdem das Glas 12 mittels der Grundzentriereinrichtung 26 vorzentriert wurde, wird das Glas 12 aufgenommen. Während des Aufnahmevorganges befindet sich die Grundzentriereinrichtung 26 vorzugsweise in Arbeitsposition bzw. Halteposition (insbesondere gemäß Fig. 2B bzw. Fig. 3B), so dass das Trinkglas 12 seine Position nicht verändern kann. Ist der Aufnahmevorgang des Trinkglases 12 abgeschlossen, werden die Zentrierelemente (z.B. Klauen 28 bzw. Prismen 30) in ihre Ausgangslage bzw. Grundstellung gebracht (insbesondere analog zu Fig. 2A bzw. Fig. 3A). Das Trinkglas 12 kann nun über die verfahrbare Aufnahmevorrichtung 10 insbesondere in vertikaler Richtung (z-Richtung) angehoben werden.

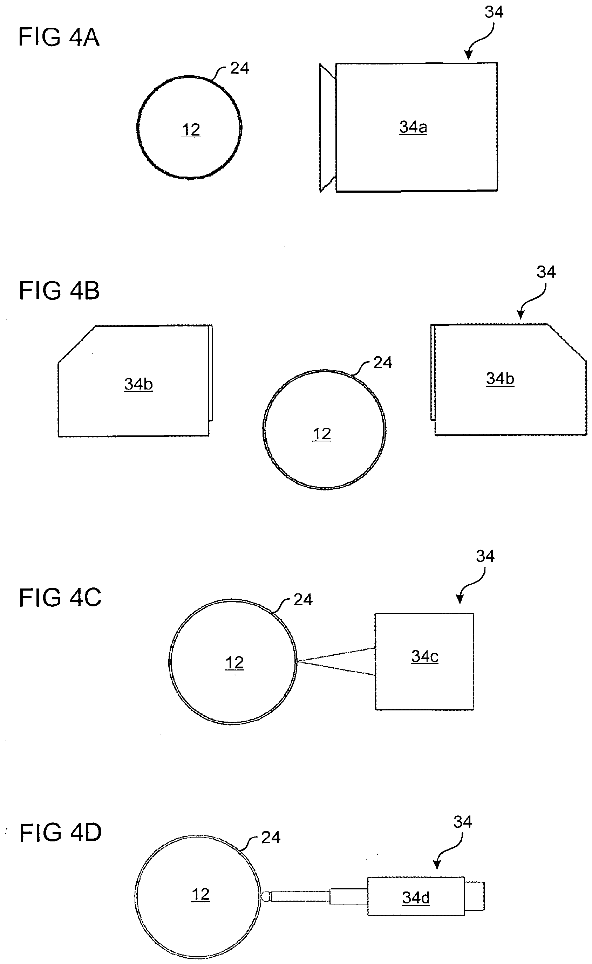

Damit das Trinkglas 12 samt einer entlang der späteren Trennlinie 24 abzutrennenden Kappe bzw. Blaskappe 32 insbesondere entlang der späteren Trennlinie 24 eine möglichst geringe Rundlaufabweichung aufweist, wird das Glas 12 vorzugsweise nach der Aufnahme nochmals exakt vermessen und ausgerichtet. Dazu wird vorzugsweise eine Zentriermesseinrichtung 34 verwendet, welche insbesondere während einer Rotation des Glases 12 um die Rotationsachse der Rotationseinheit 14 optisch und/oder mechanisch Rundlaufabweichungen insbesondere in Höhe der späteren Trennlinie 24 erfasst. In Fig. 4A bis 4D sind bevorzugte Ausführungsformen der Zentriermesseinrichtung 34 in Form eines Kamerasystems 34a (Fig. 4A), eines Lichtbandmikrometers 34b (Fig. 4B), eines Weißlichtsensors 34c (Fig. 4C) bzw. eines Messtasters 34d (Fig. 4D) dargestellt. Die Messung erfolgt dabei insbesondere im Wesentlichen auf Höhe des späteren Mundrandes, also der Trennlinie 24 insbesondere über den gesamten Umlauf von 360°. Die Drehung des kopfüber hängenden Glases 12 um die Längsachse wird über einen in der Aufnahmevorrichtung integrierten Drehantrieb generiert. Die verwendete Zentriermesseinrichtung 34 wird dabei vorzugsweise so in der Anlage montiert, dass auch bei unterschiedlichen Trinkglasgeometrien (unterschiedliche(r) Mundranddurchmesser / -höhe) stets an der richtigen Stelle gemessen werden kann.

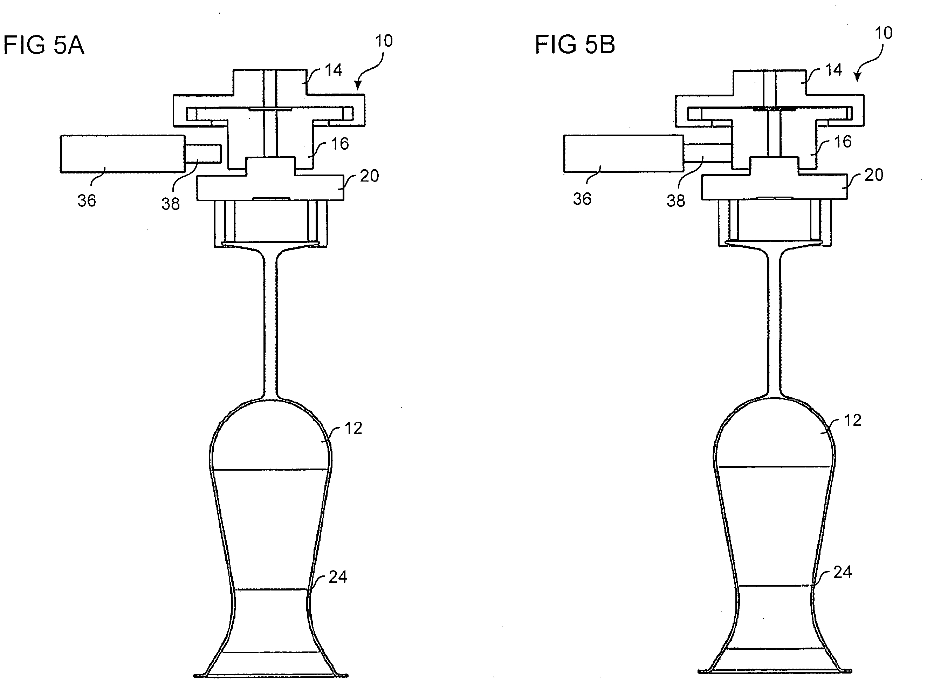

Nachdem die Rundlaufmessung beendet wurde, wird das Glas 12 vorzugsweise automatisch mittels einer Feinzentriereinrichtung 36 feinzentriert bzw. nachzentriert. Beispielsweise in der in Fig. 5A und Fig. 5B dargestellten bevorzugten Ausführungsform einer Feinzentriereinrichtung 36 wird das Glas automatisch mit der maximalen Auslenkung an eine definierte Stelle gedreht. An dieser definierten Stelle drückt dann ein stationär befestigter Druckstift 38 von außen gegen die Aufnahmevorrichtung 10 (z.B. gegen den Adapter 16 der Aufnahmevorrichtung 10), so dass der Adapter 16, an der beispielsweise wahlweise die Ansaugeinrichtung 18 oder die Greifereinrichtung 20 und somit auch das Glas 12 befestigt ist, in Achsrichtung des Druckstiftes 38 linear verschoben wird. Durch die Verschiebung um einen definierten Wert (die Hälfte des maximalen Ausschlages), kann die Rundlaufabweichung bei der Rotation des Glases 12 eliminiert oder zumindest reduziert werden.

Um eine Verschiebung des Adapters 16 zu vereinfachen, wird dieser vor dem Angreifen des Druckstiftes 38 vorzugsweise vom restlichen System (insbesondere von der Rotationseinheit 14) derart entkoppelt, dass eine relative (insbesondere horizontale) Verschiebung ermöglicht wird. Nachdem der externe Druckstift 38 das Glas 12 samt Halteeinrichtung verschoben hat, wird der Adapter 16 vorzugsweise wieder starr geschaltet, so dass sich die Position des Glases nicht mehr verändert. Wird nun das Glas 12 nach dem Vermessen des Rundlaufs und anschließendem Ausrichten (Feinzentrierung bzw. Nachzentrierung) erneut um die Längsachse bzw. Rotationsachse gedreht, so ist der Schlag (Rundlaufabweichung) im Bereich der Mundrandhöhe (Trennlinie 24) auf ein Minimum reduziert, bzw. vollständig eliminiert.

Insbesondere nach der Verbesserung der Rundlaufeigenschaften durch die Grundzentrierung und/oder Feinzentrierung (bzw. Nachzentrierung) wird vorzugsweise mit der eigentlichen Laserbearbeitung (insbesondere einer Perforation auf Mundrandhöhe 24) begonnen. Hierzu wird das Glas 12 über die Aufnahmevorrichtung 10 in die nächste Station, die Laserkammer, gefahren. Diese Kammer sollte aus Sicherheitsgründen während des Laservorgangs geschlossen und strahlendicht (z.B. Laserschutzklasse 4) sein.

Für eine besonders präzise und zuverlässige Bearbeitung zur Abtrennung des Überglases 32 wird insbesondere bei Verwendung eines fokussierten Laserstrahls der Fokus des Laserstrahls während der Rotation des Glases nachgeregelt, um damit Abweichungen des Glases 12 von einer idealen Kreisform (Ovalität) an der Trennlinie 24 oder einer nicht perfekten Zentrierung zu folgen. Dazu erfolgt vorzugsweise eine erneute Vermessung (Ovalitätsmessung) des Rundlaufs (z.B. der verbleibenden Dezentrierung bzw. Restexzentrizität und/oder der Ovalität). Die erneute Vermessung (Ovalitätsmessung) auf zukünftiger Mundrandhöhe 24 kann dabei beispielsweise wiederum über einen Messtaster, ein Lichtbandmikrometer, einen optischen Sensor (Weißlichtsensor) und/oder über eine Kamera erfolgen. Dies kann innerhalb der Laserkammer oder aber auch schon vorab erfolgen. Beispielsweise kann für die Ovalitätsmessung dieselbe Zentriermesseinrichtung 34 verwendet werden wie für die Feinzentrierung.

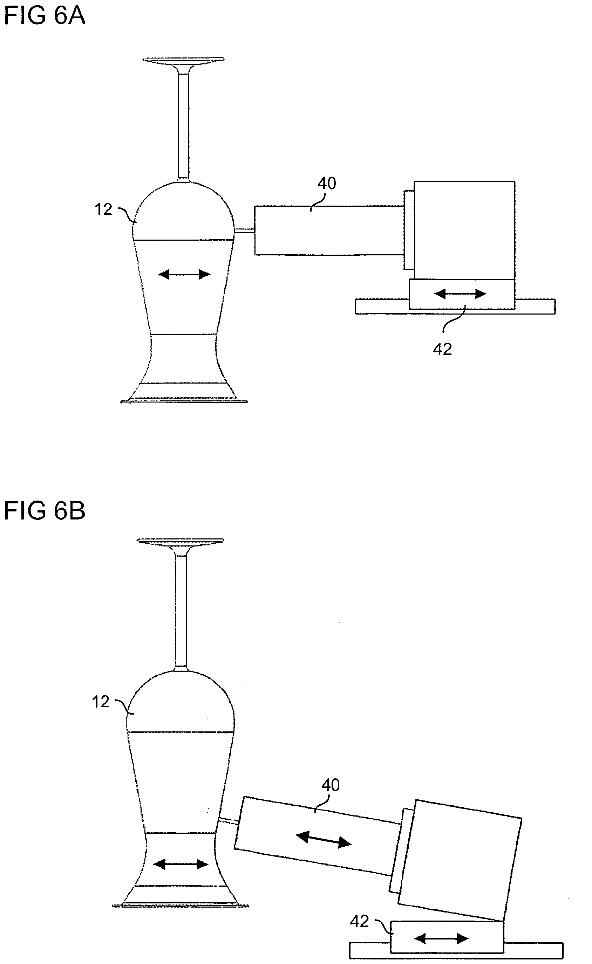

Mittels dieser Vermessung bzw. Ovalitätsmessung (Kurvenscheibe) kann somit die Optikeinheit des verwendeten Lasers der Glasoberfläche (auch bei starker Ovalität des Trinkglases 12) über den gesamten Umlauf folgen. Ein vorgegebener Offset-Wert definiert den Abstand der Optik zum Glas. Damit die Optikeinheit linear bewegt werden kann, muss diese auf einem verfahrbaren Schlittensystem befestigt werden. Das Schlittensystem mit daran befestigter Optik wird dabei vorzugsweise motorisch angetrieben. **Fig. 6A** zeigt eine beispielhafte Optikeinheit 40 eines Lasers zur Bearbeitung des Glases 12. Über eine Schlittensystem 42 kann die Optikeinheit 40 einer Ovalität des Glases 12 bei Rotation nachgeführt werden. Vorzugsweise ist das Schlittensystem 42 ausgelegt, die Optikeinheit 40 derart nachzuführen, dass damit der Fokuspunkt des Laser in einer Ebene senkrecht zur Rotationsachse der Rotationseinheit 14 verändert wird. Damit kann insbesondere sichergestellt werden, dass die zu fertigende Trennlinie 24 parallel zum Glasboden ist.

Um während eines Laserbearbeitungsvorgangs beispielsweise eine gute Filamentausbildung im Glas 12 und somit auch eine hervorragende Schnittqualität entlang der Trennlinie 24 zu erhalten, wird der Laserstrahl vorzugsweise im Wesentlichen senkrecht auf die Glasoberfläche geführt. Im Idealfall eines zylindrischen Glases oder Glasabschnitts im Bereich der Trennlinie 24 kann der Laserstrahl beispielsweise horizontal verlaufen, um auf die Glasoberfläche zu treffen, so dass die Laserrichtung (Strahl) parallel zur Richtung der Nachführachse des Schlittensystems 42 verläuft.

Bei Trinkglasgeometrien, die zur Trennlinie 24 (z.B. Mundrand) hin einer starken Aufweitung oder Einschnürung unterliegen, ist eine von der Ebene der Trennlinie 24 abweichende (geneigte) Richtung des Strahlverlaufs vorteilhaft. Der Anstellwinkel der Optik (Winkel zwischen der Nachführachse des Schlittensystems 42 und der optischen Achse der Optikeinheit 40) entspricht dabei vorzugsweise dem Winkel mit dem sich das Glas verengt oder aufweitet (z.B. **Fig. 6B**). Alternativ zu einer Verkippung der optischen Achse der Optikeinheit 40 bzw. der Laserstrahlrichtung gegenüber der Horizontalen kann ein senkrechtes Auftreffen des Lasers auf die Glasoberfläche auch durch eine entsprechende Verkippung der Glases bzw. der Rotationsachse (der Rotationseinheit 14) relativ zur Vertikalen erreicht werden. Auch eine Kombination einer Verkippung der Laserstrahlrichtung und des Glases sind möglich.

Besonders wünschenswert ist es, das Abtrennen des Überglases mit nur einem Laserbearbeitungsvorgang für die Wandstärke im gesamten Umfang (d.h. ein Druchlauf von 360°) zu durchtrennen. Sind Wandstärken von mehr als 2 mm zu durchtrennen, könnten mehrere Laserbearbeitungsvorgänge bzw. Durchläufe á 360° mit unterschiedlicher Fokuseinstellung relative zur Dickenrichtung das Glases nötig oder vorteilhaft sein, um eine hohe Schnittqualität zu erreichen. Vorzugsweise wird hierzu nach jedem Laserbearbeitungsvorgang, d.h. jeweils nach einer vollen Umdrehung des Glases (d.h. 360°) eine Verstellung des Fokusses vorgenommen. Die Verfahrbewegung der Nachführung (Fokusverstellung) erfolgt dabei vorzugsweise über ein motorisch angetriebenes Achssystem, auf dem auch die Optikeinheit 40 montiert ist.

Bei waagrechter bzw. horizontaler Optik (d.h. die optische Achse der Optikeinheit 40 liegt insbesondere senkrecht zur Rotationsachse der Rotationseinheit 14, also eine Bewegungsrichtung der Nachführachse des Schlittensystems 42 und der Laserstrahl verlaufen parallel) kann der Fokus sehr einfach verschoben bzw. zugestellt werden. In diesem Fall wird der im System hinterlegte Wert der "Working-Distance" (Offset-Wert) vergrößert oder verkleinert. Während des Laserbearbeitungsvorgangs wird dann die Nachführachse so angesteuert, dass die ermittelte Kurvenscheibe mit dem vorgegebenen Offset-Wert nachgefahren wird. Dadurch, dass die Optikeinheit 40 parallel zur Nachführachse verläuft, wird auch stets in der gleichen Ebene gelasert. Soll jedoch ein Glas bei angestellter Optik (Neigungswinkel zwischen der Optikeinheit und der Nachführachse) mehrmals gelasert werden, wird vorzugsweise eine zusätzliche Verfahrachse parallel zur angestellten Optik, also zur optischen Achse der Optikeinheit 40, genutzt, um damit den Arbeitsabstand (Working-Distance) in aufeinanderfolgenden Laservorgängen gemäß der Dicke des Glases nachzuführen.

Damit mit der erfindungsgemäßen Technologie möglichst hohe Stückzahlen (Taktraten von bis zu 60 Stück und mehr) abgearbeitet werden können, ist es vorteilhaft, Bearbeitungsstationen mit mehreren Aufnahmevorrichtungen 10 bereitzustellen, in welchen mehrere Gläser gleichzeitig gehalten und rotiert werden können, während ein Bearbeitungslaser die Gläser bearbeitet. Dabei kann die Laserbearbeitung gleichzeitig gehaltener Gläser auch nacheinander erfolgen, was insbesondere dann vorteilhaft ist, wenn die verfügbare Laserleistung dadurch besser auf einen einzelnen Bearbeitungsvorgang konzentriert werden kann. Nachdem die eigentliche Laserbearbeitung (z.B. innerhalb einer Rotation eines Glases um 360° oder 720°) sehr schnell erfolgt im Vergleich zur mechanischen Manipulation der Gläser vom Aufnehmen bis zum Vermessen und Zentrieren, können die einzelnen Bearbeitungsschritte durch ein paralleles Halten, Vermessen und Zentrieren in Kombination mit einem zumindest teilweise seriellen Laserbearbeiten sehr effizient aufeinander abgestimmt werden.

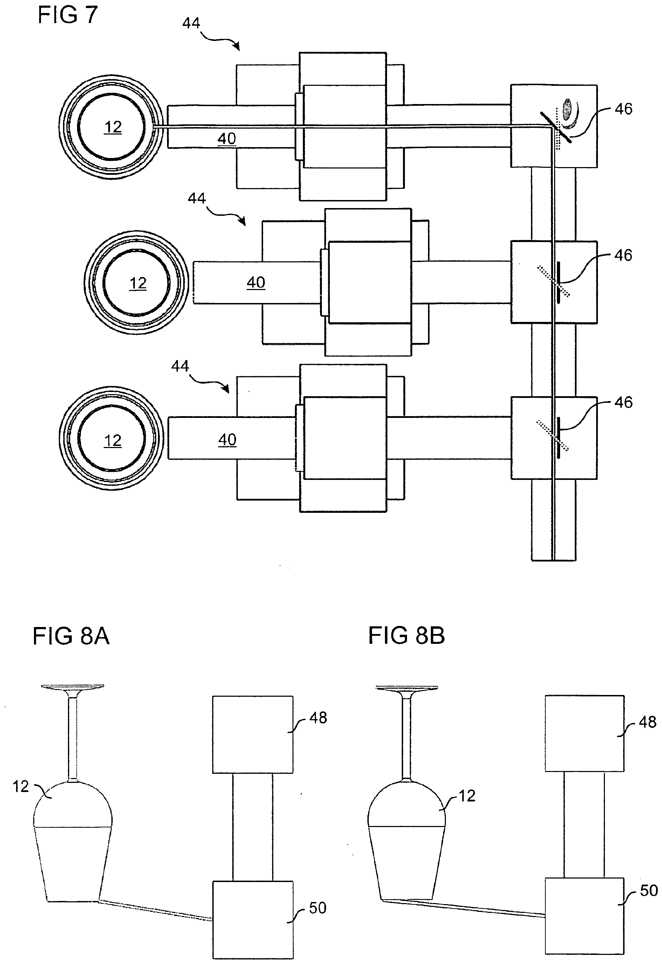

Fig. 7 zeigt eine Bearbeitungsstation 44 gemäß einer bevorzugten Ausführungsform mit einer Mehrzahl von (insbesondere drei) Aufnahmevorrichtungen und Optikeinheiten 40, so dass nicht jede Sekunde getaktet (d.h. ein Glas in einer Aufnahmevorrichtung gewechselt) werden muss. Die Taktrate kann so durch eine Zusammenfassung mehrerer (Einzelstationen Aufnahmevorrichtungen und Optikeinheiten) zu Gruppen (einer Bearbeitungsstation 44) um z. B. das Dreifache reduziert werden. Die größere Zeitdauer zwischen einer Taktung kann dann bei der Vermessung des Rundlaufs und der anschließenden Ausrichtung der Gläser oder einem anschließenden Mundrandverschmelzen genutzt werden. Nachdem der Schlagausgleich nach der Rundlaufmessung einer Dreier-Gruppe erfolgen kann (paralleler Ablauf), können die Gläser nach einer weiteren Taktung schließlich gelasert werden. Ziel ist es, mit nur einem Ultrakurzpulslaser nacheinander mehrere Gläser zu lasern. Bei einer sequentiellen Bearbeitung mehrerer Trinkgläser ist vorzugsweise für jedes Glas ein eigener Strahlengang inklusive integrierter Optikeinheit 40 zur Strahlformung vorgesehen. Der Strahl, der aus der Laserquelle austritt, kann dabei über Strahlweichen (z.B. schwenkbare Umlenkspiegel 46) so abgelenkt werden, dass nacheinander die drei nebeneinander angeordneten Gläser 12 gelasert werden können. Je nach Bearbeitungsstelle werden die Strahlweichen (Umlenkspiegel 46) ein- oder ausgefahren.

Nachdem insbesondere über den gesamten Umfang des Glases 12 Filamente (Perforation) eingebracht wurden, kann in einer nächsten Bearbeitungsstation die Kappe 32 vom Trinkglas 12 getrennt werden. Damit sich die Kappe 32 zuverlässig vom Glas löst, wird vorzugsweise zielgerichtet Energie in Form von Wärme an der Trennfläche bzw. Trennlinie 24 (Filamentlinie) eingebracht. Diese Wärme kann beispielsweise mittels einer Brennerflamme und/oder mittels eines Laserstrahl eines CO2-Lasers erzeugt werden. Damit sich die Wärme möglichst gleichmäßig über den gesamten Umfang der Trennlinie 24 verteilt, ist eine Drehung des Glases mit konstanter Drehzahl bevorzugt. Aufgrund des Spannungsunterschiedes (eingebrachte Wärme an der Trennstelle - "kaltes" Glas (Raumtemperatur)), der durch die Wärme entsteht, wird die Kappe 32 vom Rest des Trinkglases 12 abgetrennt. Dadurch, dass das Trinkglas 12 vorzugsweise kopfüber an der Aufnahmevorrichtung 10 hängt, kann auch die Kappe 32 nach unten in einen Schacht fallen und abtransportiert werden. Auf eine zusätzliche Entnahmeeinheit für die Kappe 32 kann somit verzichtet werden.

Da durch Filamentschneiden mit einem Ultrakurzpulslaser eine sehr hohe Qualität der Trennkante an der Trennlinie 24 erzeugt werden kann, ist auch keine weitere Bearbeitung des zukünftigen Mundrandes in Form von Schleifen notwendig. Es kann nun, falls gewünscht, direkt mit dem CO₂-Laser der Mundrand facettiert werden (Erzeugung einer Fase an der Außen- und Innenkante), wie dies beispielhaft in **Fig. 8A** und **Fig. 8B** dargestellt ist. Hierbei wird das Glas 12 vorzugsweise in Rotation versetzt. Ein mit einem CO₂-Laser 48 verbundener 2D-Scanner 50 lenkt den Laserstrahl beispielsweise für eine Umdrehung (360°) auf die Außenkante (Fig. 8A) und für eine weitere Umdrehung an die Innenkannte (Fig. 8B) des Glases 12, so dass die scharfen Kanten aufgrund der Wärmeeinwirkung am Mundrand entfernt werden und sich folglich ein leichte Fase ausbildet.

Soweit gewünscht kann an weiteren Stationen auch der Mundrand des Trinkglases nach dem Absprengen der Kappe verschmolzen werden. Das Glas wird dabei vorzugsweise vorab flächig erwärmt und anschließend beispielsweise mit einer scharfen Brennerflamme bearbeitet. Das rotierende Glas wird - je nach gewünschtem Verschmelzgrad - der Flamme nur für eine entsprechend kurze Zeitdauer ausgesetzt. Durch die Wärmeentwicklung wird das Glas an der Trennkante teilweise aufgeschmolzen, so dass sich an dieser Stelle eine Verrundung ausbildet.

Auch soweit in der obigen Beschreibung insbesondere auf die Herstellung von Trinkgläsern eingegangen wurde, ist das erfindungsgemäße Verfahren und eine entsprechende erfindungsgemäße Vorrichtung auch auf andere nicht-planare Gläser bzw. Hohlgläser anwendbar, welche insbesondere in einem glasblas-technischen Verfahren hergestellt werden und bei denen ein Überglas (Blaskappe) an einer Trennlinie vom restlichen Glas getrennt werden muss. Somit können beispielsweise auch Glasvasen, Glasschalen oder Glaskaraffen in erfindungsgemäßer Weise hergestellt werden, jedenfalls solange die Glasdicke vorzugsweise in einem Bereich bis zu etwa 4 mm, besonders bevorzugt bis zu etwa 3 mm, noch mehr bevorzugt bis zu etwa 2 mm liegt. Zwar sind größere Glasdicken nicht grundsätzlich ausgeschlossen. Allerdings sind dann entsprechend hohe Anforderungen an die Laserleistung und die präzise Fokussierung des Lasers zu stellen und es werden vorzugsweise mehrere Laserdurchgänge (mehrere Umläufe entlang der Trennlinie) verwendet.

Die vorliegende Erfindung bietet insbesondere durch besonders bevorzugt mehrstufige Zentrierung und Nachführung des Lasers die erforderlichen Grundlagen, um auch das Regime dickerer Gläser für ein Laserfilamentschneideverfahren zugänglich zu machen. Dies ist insbesondere deshalb des vorteilhaft, weil mit dieser Technologie eine verunreinigende Nachbearbeitung des Glasrandes im Bereich der Trennlinie und damit auch eine unmittelbar nachfolgende Reinigung nicht mehr erforderlich ist. Dies reduziert die nötigen Verfahrensschritte und verhindert beispielsweise, dass nach dem Reinigen noch Reinigungsfluid (z.B. Wasser) auf dem Glas verbleibt, das bei nachfolgenden Prozessschritten störend sein kann.

### Bezugszeichenliste

- 10: Aufnahmevorrichtung
- 12: Glas, Trinkglas
- 14: Rotationseinheit
- 16: Adapter
- 18: Ansaugeinrichtung
- 20: Greifereinrichtung
- 22: Greiferfinger
- 24: Trennlinie
- 26: Grundzentriereinrichtung
- 28: Klauen
- 30: Prismen
- 32: Kappe, Blaskappe
- 34: Zentriermesseinrichtung
- 36: Feinzentriereinrichtung
- 38: Druckstift
- 40: Optikeinheit
- 42: Schlittensystem
- 44: Bearbeitungsstation
- 46: Umlenkspiegel
- 48: CO₂-Laser
- 50: 2D-Scanner

## Patentansprüche

1. Verfahren zum Abtrennen des Überglases (32) bei der Herstellung von Hohlgläsern (12), umfassend:
- Zentrieren eines Hohlglases (12) in einer Aufnahmevorrichtung (10), welche ausgelegt ist, das Hohlglas (12) zu halten und um eine Rotationsachse zu rotieren, derart, dass eine Trennlinie (24), entlang der das Überglas (32) von dem herzustellenden Hohlglas (12) getrennt werden soll, zur Rotationsachse zentriert ist;
- Bearbeiten des Hohlglases (12) an einer Vielzahl von Positionen entlang der Trennlinie (24) mittels eines Laserstrahls zur Erzeugung lokaler Filamente mit geschwächter Glasstruktur während einer Rotation des Hohlglases (12) um die Rotationsachse; und
- Einbringen von Energie entlang der Trennlinie (24) zur Abtrennung des Überglases (32) entlang der geschwächten Glasstruktur,
wobei das Zentrieren des Hohlglases (12) ein Grundzentrieren umfasst, welches umfasst:
- Abstellen des Hohlglases (12) auf einer Ablagefläche oder verschiebbares Aufnehmen des Hohlglases (12) mittels der Aufnahmevorrichtung (10);
- Verschieben des Hohlglases (12) auf der Ablagefläche bzw. relativ zur Aufnahmevorrichtung (10) zum Zentrieren des Hohlglases in der Höhe der Trennlinie (24) relativ zur Rotationsachse; und anschließendes
- Aufnehmen des Hohlglases (12) mittels der Aufnahmevorrichtung (10) bzw. Arretieren des Hohlglases (12) relativ zur Aufnahmevorrichtung,
wobei das Zentrieren des Hohlglases (12) ein Feinzentrieren des von einer Halteeinrichtung (18; 20) der Aufnahmevorrichtung (10) gehaltenen Hohlglases derart umfasst, dass das Feinzentrieren umfasst:
- Ermitteln einer Dezentrierung des von der Aufnahmevorrichtung (10) gehaltenen Hohlglases (12) mittels einer Zentriermesseinrichtung (34); und
- Verschieben der Halteeinrichtung (18; 20) der Aufnahmevorrichtung (10) relativ zur Rotationsachse, um die ermittelte Dezentrierung zumindest teilweise zu kompensieren.

2. Verfahren nach Anspruch 1, wobei das Einbringen von Energie entlang der Trennlinie (24) zur Abtrennung des Überglases (32) entlang der geschwächten Glasstruktur ein lokales Einbringen von thermischer Energie während einer Rotation des Hohlglases (12) um die Rotationsachse umfasst.

3. Verfahren nach einem der vorangegangenen Ansprüche, wobei das Bearbeiten des Hohlglases (12) mittels des Laserstrahls ein Nachführen eines Fokuspunktes des Laserstrahls derart umfasst, dass das Nachführen umfasst:
- Ermitteln einer Ovalität und/oder Restexzentrizität des Hohlglases (12) entlang der Trennlinie (24); und
- Verschieben einer Optikeinheit (40) in einer Richtung senkrecht zur Rotationsachse während einer Rotation des Glases, um den Fokuspunkt des Laserstrahls der ermittelten Ovalität und/oder Restexzentrizität nachzuführen.

4. Verfahren nach einem der vorangegangenen Ansprüche, wobei zum Bearbeiten des Hohlglases (12) ein Einstrahlen des Laserstrahls auf das Hohlglas (12) in einer Einstrahlrichtung erfolgt, die nicht senkrecht zur Rotationsachse liegt, und wobei die Bearbeitung des Hohlglases (12) umfasst:
- einen ersten Laserbearbeitungsvorgang, während dessen das Glas um 360° um die Rotationsachse gedreht wird und der Laser auf eine erste Fokustiefe in der Glaswand des Hohlglases (12) eingestellt ist; und
- einen zweiten Laserbearbeitungsvorgang nach dem ersten Laserbearbeitungsvorgang, während dessen das Glas um 360° um die Rotationsachse gedreht wird und der Laser auf eine zweite Fokustiefe in der Glaswand des Hohlglases (12) eingestellt ist, welche gegenüber der ersten Fokustiefe in einer Richtung parallel zur Einstrahlrichtung verschoben ist.

5. Verfahren nach einem der vorangegangenen Ansprüche, wobei das Bearbeiten des Hohlglases (12) an einer Vielzahl von Positionen entlang der Trennlinie (24) mittels eines Laserstrahls zur Erzeugung lokaler Filamente mit geschwächter Glasstruktur ein Einstrahlen eines fokussierten, gepulsten Laserstrahls umfasst.

6. Vorrichtung zum Abtrennen des Überglases (32) bei der Herstellung von Hohlgläsern (12), umfassend:
- eine Aufnahmevorrichtung (10), welche ausgelegt ist, ein Hohlglas (12) zu halten und um eine Rotationsachse zu rotieren,
- eine Zentriereinrichtung zum Zentrieren des Hohlglases (12) in der Aufnahmevorrichtung (10) derart, dass eine Trennlinie (24), entlang der das Überglas (32) von dem herzustellenden Hohlglas (12) getrennt werden soll, zur Rotationsachse zentriert ist;
- eine Laserbearbeitungseinrichtung zum Bearbeiten des Hohlglases (12) an einer Vielzahl von Positionen entlang der Trennlinie (24) mittels eines Laserstrahls zur Erzeugung lokaler Filamente mit geschwächter Glasstruktur während einer Rotation des Hohlglases (12) um die Rotationsachse; und
- eine Abtrenneinrichtung (48, 50) zum Einbringen von Energie entlang der Trennlinie (24) zur Abtrennung des Überglases (32) entlang der geschwächten Glasstruktur,
wobei die Zentriereinrichtung eine Grundzentriereinrichtung (26) umfasst, welche ausgelegt ist, das Hohlglas (12) auf einer Ablagefläche bzw. relativ zur Aufnahmevorrichtung (10) derart zu verschieben, dass es in der Höhe der Trennlinie (24) relativ zur Rotationsachse zentriert wird; und wobei die Aufnahmevorrichtung (10) ausgelegt ist, das von der Grundzentriereinrichtung zentrierte Hohlglas (12) aufzunehmen bzw. zu arretieren,
wobei die Aufnahmevorrichtung (10) eine relativ zur Rotationsachse verschiebbare Halteeinrichtung (18; 20) zum Halten des Hohlglases (12) umfasst, und wobei die Zentriereinrichtung umfasst:
- eine Zentriermesseinrichtung (34) zum Ermitteln einer Dezentrierung des von der Aufnahmevorrichtung (10) gehaltenen Hohlglases (12); und
- eine Feinzentriereinrichtung (36) zum Verschieben der Halteeinrichtung (18; 20) der Aufnahmevorrichtung (10) relativ zur Rotationsachse, um die ermittelte Dezentrierung zumindest teilweise zu kompensieren.

7. Vorrichtung nach Anspruch 6, wobei die Abtrenneinrichtung (48, 50) eine thermische Energiequelle, insbesondere einen Gasbrenner oder einen CO₂-Laser umfasst, die ausgelegt ist, während einer Rotation des Hohlglases (12) um die Rotationsachse, lokal thermische Energie in das Hohlglas entlang der Trennlinie (24) einzubringen.

8. Vorrichtung nach einem der vorangegangenen Ansprüche 6 bis 7, umfassend
- eine Ovalitätsmesseinrichtung (34), zum Ermitteln einer Ovalität und/oder Restexzentrizität des Hohlglases (12) entlang der Trennlinie (24); und
- eine Nachführeinrichtung (42), welche ausgelegt ist, eine Optikeinheit (40) der Laserbearbeitungseinrichtung in einer Richtung senkrecht zur Rotationsachse derart zu verschieben, dass der Fokuspunkt des Laserstrahls während einer Rotation des Hohlglases (12) der ermittelten Ovalität und/oder Restexzentrizität nachgeführt wird.

9. Vorrichtung nach einem der vorangegangenen Ansprüche 6 bis 8, wobei die Laserbearbeitungseinrichtung ausgelegt ist, den Laserstrahl in einer Einstrahlrichtung auf das Hohlglas (12) einzustrahlen, die nicht senkrecht zur Rotationsachse liegt, und wobei die Vorrichtung ausgelegt ist, in einem ersten Laserbearbeitungsvorgang, während dessen das Glas um 360° um die Rotationsachse gedreht wird, eine erste Fokustiefe des Laserstrahls in der Glaswand des Hohlglases (12) einzustellen, und in einem zweiten Laserbearbeitungsvorgang nach dem ersten Laserbearbeitungsvorgang, während dessen das Glas um 360° um die Rotationsachse gedreht wird, eine zweite Fokustiefe des Laserstrahls in der Glaswand des Hohlglases (12) einzustellen, welche gegenüber der ersten Fokustiefe in einer Richtung parallel zur Einstrahlrichtung verschoben ist.

10. Vorrichtung nach einem der vorangegangenen Ansprüche 6 bis 9, wobei die Laserbearbeitungseinrichtung einen fokussierten, gepulsten Laser umfasst.

11. Vorrichtung nach einem der vorangegangenen Ansprüche 6 bis 10, umfassend eine Mehrzahl von Bearbeitungsstationen, von denen jede umfasst:
- eine Aufnahmevorrichtung (10), welche ausgelegt ist, ein Hohlglas (12) zu halten und um eine Rotationsachse zu rotieren; und
- eine Zentriereinrichtung zum Zentrieren des Hohlglases (12) in der Aufnahmevorrichtung (10) derart, dass eine Trennlinie (24), entlang der das Überglas (32) von dem herzustellenden Hohlglas (12) getrennt werden soll, zur Rotationsachse zentriert ist;
- eine Optikeinheit (40) zum Fokussieren des Laserstrahls auf das von der jeweiligen Aufnahmevorrichtung (10) gehaltene Hohlglas (12) entlang der Trennlinie (24); und
- ein Laserstrahleinkoppelelement (46) zum selektiven Einkoppeln eines Laserstrahls in die Optikeinheit (40) der jeweiligen Bearbeitungsstation.

## Claims

1. Method for separating excess glass (32) in the production of hollow glass products (12), comprising:
- centring a hollow glass product (12) in a receiving device (10), which is designed to hold the hollow glass (12) and to rotate same about a rotational axis in such a manner that a separation line (24), along which the excess glass (32) is to be separated from the hollow glass product (12) to be produced, is centred in relation to the rotational axis;
- processing the hollow glass product (12) in a plurality of positions along the separation line (24) by means of a laser beam in order to generate local filaments with a weakened glass structure during a rotation of the hollow glass product (12) about the rotational axis; and
- introducing energy along the separation line (24) in order to separate the excess glass (32) along the weakened glass structure,
wherein the centring of the hollow glass product (12) comprises a basic centring which comprises:
- placing the hollow glass product (12) on a support surface or displaceably receiving the hollow glass product (12) by means of the receiving device (10);
- displacing the hollow glass product (12) on the support surface or relative to the receiving device (10) in order to centre the hollow glass product at the height of the separation line (24) relative to the rotational axis; and then
- receiving the hollow glass product (12) by means of the receiving device (10) or locking the hollow glass product (12) relative to the receiving device,
wherein the centring of the hollow glass product (12) comprises a fine centring of the hollow glass product held by a holding apparatus (18; 20) of the receiving device (10) in such a manner that the fine centring comprises:
- determining a decentring of the hollow glass product (12) held by the receiving device (10) by means of a centring measurement apparatus (34); and
- displacing the holding apparatus (18; 20) of the receiving device (10) relative to the rotational axis in order to at least partially compensate for the determined decentring.

2. Method according to claim 1, wherein the introduction of energy along the separation line (24) in order to separate the excess glass (32) along the weakened glass structure comprises a local introduction of thermal energy during a rotation of the hollow glass product (12) about the rotational axis.

3. Method according to one of the preceding claims, wherein the processing of the hollow glass product (12) by means of the laser beam comprises a tracking of a focus point of the laser beam in such a manner that the tracking comprises:
- determining an ovality and/or residual eccentricity of the hollow glass product (12) along the separation line (24); and
- displacing an optical unit (40) in a direction perpendicular to the rotational axis during a rotation of the glass product in order to track the focus point of the laser beam of the determined ovality and/or residual eccentricity.

4. Method according to one of the preceding claims, wherein in order to process the hollow glass product (12), an irradiation of the laser beam onto the hollow glass product (12) is carried out in an irradiation direction which is not perpendicular to the rotational axis, and wherein the processing of the hollow glass product (12) comprises:
- a first laser processing operation during which the glass product is rotated by 360° about the rotational axis and the laser is set to a first focus depth in the glass wall of the hollow glass product (12); and
- a second laser processing operation after the first laser processing operation, during which the glass product is rotated by 360° about the rotational axis and the laser is set to a second focus depth in the glass wall of the hollow glass product (12), which second focus depth is displaced with respect to the first focus depth in a direction parallel to the irradiation direction.

5. Method according to one of the preceding claims, wherein the processing of the hollow glass product (12) at a plurality of positions along the separation line (24) by means of a laser beam to generate local filaments with a weakened structure comprises an irradiation of a focused, pulsed laser beam.

6. Device for separating excess glass (32) in the production of hollow glass products (12), comprising:
- a receiving device (10) which is designed to hold a hollow glass product (12) and rotate same about a rotational axis,
- a centring apparatus for centring a hollow glass product (12) in the receiving device (10) in such a manner that a separation line (24), along which the excess glass (32) is to be separated from the hollow glass product (12) to be produced, is centred in relation to the rotational axis;
- a laser processing apparatus for processing the hollow glass product (12) at a plurality of positions along the separation line (24) by means of a laser beam in order to generate local filaments with a weakened glass structure during a rotation of the hollow glass product (12) about the rotational axis; and
- a separation apparatus (48, 50) for introducing energy along the separation line (24) in order to separate the excess glass (32) along the weakened glass structure,
wherein the centring apparatus comprises a basic centring apparatus (26) to displace the hollow glass product (12) on a support surface or relative to the receiving device (10) in such a manner that it is centred at the height of the separation line (24) relative to the rotational axis; and wherein the receiving device (10) is designed to receive or lock the hollow glass product (12) centred by the basic centring apparatus,
wherein the receiving device (10) comprises a holding apparatus (18; 20), which is displaceable relative to the rotational axis, in order to hold the hollow glass product (12) and wherein the centring apparatus comprises:
- a centring measurement apparatus (34) for determining a decentring of the hollow glass product (12) held by the receiving device (10); and
- a fine centring apparatus (36) for displacing the holding apparatus (18; 20) of the receiving device (10) relative to the rotational axis in order to at least partially compensate for the determined decentring.

7. Device according to claim 6, wherein the separation apparatus (48, 50) comprises a thermal energy source, more particularly a gas burner or a CO₂ laser, which is designed to introduce thermal energy into the hollow glass product along the separation line during a rotation of the hollow glass product (12) about the rotational axis.

8. Device according to one of preceding claims 6 to 7, comprising
- an ovality measurement apparatus (34) for determining an ovality and/or residual eccentricity of the hollow glass product (12) along the separation line (24); and
- a tracking apparatus (42) which is designed to displace an optical unit (40) of the laser processing apparatus in a direction perpendicular to the rotational axis in such a manner that the focus point of the laser beam is tracked during a rotation of the hollow glass product (12) of the determined ovality and/or residual eccentricity.

9. Device according to one of preceding claims 6 to 8, wherein the laser processing apparatus is designed to irradiate the laser beam onto the hollow glass product (12) in an irradiation direction that is not perpendicular to the rotational axis, and wherein the device is designed to set a first focus depth of the laser beam in the glass wall of the hollow glass product (12) in a first laser processing operation during which the glass product is rotated by 360° about the rotational axis and to set a second focus depth of the laser beam in the glass wall of the hollow glass product (12) in a second laser processing operation during which the glass product is rotated by 360° about the rotational axis, the second focus depth being displaced with respect to the first focus depth in a direction parallel to the irradiation direction.

10. Device according to one of preceding claims 6 to 9, wherein the laser processing apparatus comprises a focused, pulsed laser.

11. Device according to one of preceding claims 6 to 10, comprising a plurality of processing stations, each of which comprises:
- a receiving device (10) which is designed to hold a hollow glass product (12) and rotate same about a rotational axis; and
- a centring apparatus for centring the hollow glass product (12) in the receiving device (10) in such a manner that a separation line (24), along which the excess glass (32) is to be separated from the hollow glass product (12) to be produced, is centred in relation to the rotational axis;
- an optical unit (40) for focusing the laser beam onto the hollow glass product (12), which is held by the respective receiving device (10), along the separation line (24); and
- a laser beam coupling element (46) for selectively coupling a laser beam into the optical unit (40) of the respective processing station.

## Revendications

1. Procédé pour séparer le verre supérieur (32) lors de la fabrication de verres creux (12), comprenant :
- le centrage d'un verre creux (12) dans un dispositif de réception (10), qui est conçu pour maintenir le verre creux (12) et pour le faire tourner autour d'un axe de rotation de telle manière qu'une ligne de séparation (24), le long de laquelle le verre supérieur (32) doit être séparé du verre creux (12) à fabriquer, est centrée par rapport à l'axe de rotation ;
- le traitement du verre creux (12) sur une pluralité de positions le long de la ligne de séparation (24) au moyen d'un faisceau laser pour produire des filaments locaux avec une structure de verre affaiblie pendant une rotation du verre creux (12) autour de l'axe de rotation ; et
- l'introduction d'énergie le long de la ligne de séparation (24) pour séparer le verre supérieur (32) le long de la structure de verre affaiblie,
dans lequel le centrage du verre creux (12) comprend un centrage de base, lequel comprend :
- le placement du verre creux (12) sur une surface de dépôt ou la réception de manière à pouvoir déplacer du verre creux (12) au moyen du dispositif de réception (10) ;
- le déplacement du verre creux (12) sur la surface de dépôt ou par rapport au dispositif de réception (10) pour centrer le verre creux à la hauteur de la ligne de séparation (24) par rapport à l'axe de rotation ; puis
- la réception du verre creux (12) au moyen du dispositif de réception (10) ou l'arrêt du verre creux (12) par rapport au dispositif de réception,
dans lequel le centrage du verre creux (12) comprend un centrage précis du verre creux maintenu par un système de maintien (18 ; 20) du dispositif de réception (10) de telle manière que le centrage précis comprend :
- la détermination d'un décentrage du verre creux (12) maintenu par le dispositif de réception (10) au moyen d'un système de mesure de centrage (34) ; et
- le déplacement du système de maintien (18 ; 20) du dispositif de réception (10) par rapport à l'axe de rotation pour compenser au moins en partie le décentrage déterminé.

2. Procédé selon la revendication 1, dans lequel l'introduction d'énergie le long de la ligne de séparation (24) pour séparer le verre supérieur (32) le long de la structure de verre affaiblie comprend une introduction locale d'énergie thermique pendant une rotation du verre creux (12) autour de l'axe de rotation.

3. Procédé selon l'une quelconque des revendications précédentes, dans lequel le traitement du verre creux (12) au moyen du faisceau laser comprend un suivi d'un point focal du faisceau laser de telle manière que le suivi comprend :
- la détermination d'une ovalisation et/ou d'une excentricité résiduelle du verre creux (12) le long de la ligne de séparation (24) ; et
- le déplacement d'une unité optique (40) dans une direction de manière perpendiculaire par rapport à l'axe de rotation pendant une rotation du verre pour amener le point focal du faisceau laser à suivre l'ovalisation et/ou l'excentricité résiduelle déterminée.

4. Procédé selon l'une quelconque des revendications précédentes, dans lequel pour traiter le verre creux (12), un rayonnement incident du faisceau laser a lieu sur le verre creux (12) dans une direction de rayonnement incident qui ne se situe pas de manière perpendiculaire par rapport à l'axe de rotation, et dans lequel le traitement du verre creux (12) comprend :
- une première opération de traitement au laser, au cours de laquelle le verre est tourné de 360° autour de l'axe de rotation et le laser est réglé sur une première profondeur focale dans la paroi de verre du verre creux (12) ; et
- une deuxième opération de traitement au laser après la première opération de traitement au laser, au cours de laquelle le verre est tourné de 360° autour de l'axe de rotation et le laser est réglé sur une deuxième profondeur focale dans la paroi de verre du verre creux (12), laquelle est déplacée dans une direction de manière parallèle par rapport à la direction de rayonnement incident par rapport à la première profondeur focale.

5. Procédé selon l'une quelconque des revendications précédentes, dans lequel le traitement du verre creux (12) sur une pluralité de positions le long de la ligne de séparation (24) au moyen d'un faisceau laser pour produire des filaments locaux avec une structure de verre affaiblie comprend un rayonnement incident d'un faisceau laser pulsé focalisé.

6. Dispositif pour séparer le verre supérieur (32) lors de la fabrication de verres creux (12), comprenant :
- un dispositif de réception (10), qui est conçu pour maintenir un verre creux (12) et le faire tourner autour d'un axe de rotation,
- un système de centrage pour centrer le verre creux (12) dans le dispositif de réception (10) de telle manière qu'une ligne de séparation (24), le long de laquelle le verre supérieur (32) doit être séparé du verre creux (12) à fabriquer, est centrée par rapport à l'axe de rotation ;
- un système de traitement au laser pour traiter le verre creux (12) sur une pluralité de positions le long de la ligne de séparation (24) au moyen d'un faisceau laser pour produire des filaments locaux avec une structure de verre affaiblie pendant une rotation du verre creux (12) autour de l'axe de rotation ; et
- un système de séparation (48, 50) pour apporter de l'énergie le long de la ligne de séparation (24) pour séparer le verre supérieur (32) le long de la structure de verre affaiblie,
dans lequel le système de centrage comprend un système de centrage de base (26), qui est conçu pour déplacer le verre creux (12) sur une surface de dépôt ou par rapport au dispositif de réception (10) de telle manière qu'il est centré par rapport à l'axe de rotation à la hauteur de la ligne de séparation (24) ; et dans lequel le dispositif de réception (10) est conçu pour recevoir ou arrêter le verre creux (12) centré par le système de centrage de base,
dans lequel le dispositif de réception (10) comprend un système de maintien (18 ; 20) pouvant être déplacée par rapport à l'axe de rotation pour maintenir le verre creux (12), et dans lequel le système de centrage comprend :
- un système de mesure de centrage (34) pour déterminer un décentrage du verre creux (12) maintenu par le dispositif de réception (10) ; et
- un système de centrage précis (36) pour faire déplacer le système de maintien (18 ; 20) du dispositif de réception (10) par rapport à l'axe de rotation pour compenser au moins en partie le décentrage déterminé.

7. Dispositif selon la revendication 6, dans lequel le système de séparation (48, 50) comprend une source d'énergie thermique, en particulier un brûleur à gaz ou un laser au CO₂, qui est conçue pour apporter localement de l'énergie thermique dans le verre creux le long de la ligne de séparation (24) pendant une rotation du verre creux (12) autour de l'axe de rotation.

8. Dispositif selon l'une quelconque des revendications précédentes 6 à 7, comprenant
- un système de mesure d'ovalisation (34) pour déterminer une ovalisation et/ou une excentricité résiduelle du verre creux (12) le long de la ligne de séparation (24) ; et
- un système de suivi (42) qui est conçu pour déplacer une unité optique (40) du système de traitement au laser dans une direction de manière perpendiculaire par rapport à l'axe de rotation de telle manière que le point focal du faisceau laser est guidé pendant une rotation du verre creux (12) de manière à suivre l'ovalisation et/ou l'excentricité résiduelle déterminée.

9. Dispositif selon l'une quelconque des revendications 6 à 8, dans lequel le système de traitement au laser est conçu pour rayonner sur le verre creux (12) de manière incidente le faisceau laser dans une direction de rayonnement incident, qui ne se situe pas de manière perpendiculaire par rapport à l'axe de rotation, et dans lequel le dispositif est conçu pour régler lors d'une première opération de traitement au laser, pendant laquelle le verre est tourné de 360° autour de l'axe de rotation, une première profondeur focale du faisceau laser dans la paroi en verre du verre creux (12), et pour régler, lors d'une deuxième opération de traitement au laser après la première opération de traitement au laser, au cours de laquelle le verre est tourné de 360° autour de l'axe de rotation, une deuxième profondeur focale du faisceau laser dans la paroi en verre du verre creux (12), laquelle est déplacée dans une direction de manière parallèle par rapport à la direction du rayonnement incident par rapport à la première profondeur focale.

10. Dispositif selon l'une quelconque des revendications 6 à 9, dans lequel le système de traitement au laser comprend un laser pulsé focalisé.

11. Dispositif selon l'une quelconque des revendications 6 à 10, comprenant une multitude de postes de traitement, dont chaque poste de traitement comprend :
- un dispositif de réception (10), qui est conçu pour maintenir un verre creux (12) et le faire tourner autour d'un axe de rotation ; et
- un système de centrage pour centrer le verre creux (12) dans le dispositif de réception (10) de telle manière qu'une ligne de séparation (24), le long de laquelle le verre supérieur (32) doit être séparé du verre creux (12) à fabriquer, est centrée par rapport à l'axe de rotation ;
- une unité optique (40) pour focaliser le faisceau laser sur le verre creux (12) maintenu par le dispositif de réception (10) respectif le long de la ligne de séparation (24) ; et
- un élément d'injection de faisceau laser (46) pour injecter de manière sélective un faisceau laser dans l'unité optique (40) du poste de traitement respectif.
